# EUROPEAN PATENT APPLICATION

(11) **EP 3 147 475 A1**
(43) Date of publication of application: **29.03.2017**
(21) Application number: 14892671.0
(22) Date of filing: 22.05.2014
(51) Int. Cl.: F02B 23/06, F02F 3/28

(54) **COMBUSTION CHAMBER STRUCTURE FOR DIESEL ENGINE**

(71) Applicant: NISSAN MOTOR CO., LTD., Yokohama-shi, Kanagawa 221-0023 (JP)
(72) Inventor: UEHARA, Isshou, Atsugi-shi Kanagawa 243-0123 (JP); TSUJI, Naohide, Atsugi-shi Kanagawa 243-0123 (JP); EMI, Masahiko, Atsugi-shi Kanagawa 243-0123 (JP)
(74) Representative: Hoefer & Partner Patentanwälte mbB
(86) International application number: PCT/JP2014/063533
(87) International publication number: WO 2015/177898

(57) **Abstract**

A piston (4) of a direct injection type diesel engine (1) has a re-entrant type cavity (6), and a fuel injection nozzle (7) with multiple nozzle holes is arranged on the center line thereof. The cavity (6) has a lip portion (42), which is the portion thereof having the smallest diameter, positioned below a piston crown surface (43) and a pocket portion (44) formed above the lip portion (42). The pocket portion (44) is positioned at a height to which a pilot injection injected prior to the top dead center under engine idling is directed, and the position of a wall surface (45) is so set that a leading part of the injection spray does not collide strongly therewith. The fuel from the pilot injection temporarily stays in the pocket portion (44) and moves into the cavity (6) by means of a subsequent squish flow. Accordingly, an increase in unburned hydrocarbons (HC) is suppressed.

## Description

### Technical Field:

The present invention relates to a combustion chamber structure of a direct injection type diesel engine in which a re-entrant type cavity is formed on the crown surface of a piston and a fuel injection nozzle with multiple nozzle holes is arranged on the center line of the cavity.

### Background Art:

In direct injection type diesel engines, there is known a technique that, prior to a main injection effected at a given injection period after a top dead center, a small amount of fuel is injected prior to the top dead center as a so-called pilot injection, and in recent years, for reducing noise (viz., diesel knock sound) in a low load area and improving combustion stability, making the pilot injection multistage is being undertaken.

If the pilot injection is tried in multistage in the low load area such as in engine idling, the first injection is made at a stage prior to the top dead center where the cylinder internal pressure is relatively low. Since, in addition to this, each injection amount is very small, the fuel injection is carried out in such a manner that the needle of the fuel injection nozzle does not make a full-lifting, and thus, penetration (viz., spray penetration or fuel spray reaching distance) is increased. Accordingly, in common re-entrant type cavity, initial fuel spray of the pilot injection is forced to collide against an inner wall surface of the cavity and thus the fuel spray is splashed to the outside of the cavity and/or adhered to the inner wall surface of the cavity, bringing about a problem of deterioration of unburned HC.

While, if, considering the penetration of the above-mentioned pilot injection, a large diameter type cavity combustion chamber making the inlet diameter of the cavity larger is provided, the cavity is necessarily flattened in shape, and thus, swirl flow speed and squish flow speed in the cavity are reduced and thus in a medium high load area, deterioration of soot generation tends to occur due to insufficient mixing of the mixture in the cavity.

In Patent Document-1, there is shown a construction in which an open edge of a cavity is formed with a scooped portion and an inlet lip portion is formed at a position lower than the top surface of the piston by one step. However, actually, this Patent Document-1 discloses a technique by which the fuel spray is positively collided against the scooped portion above the lip portion for the purpose of being directed upward, and thus, the disclosed technique does not improve the deterioration of the unburned HC caused by the pilot injection effected prior to the top dead center.

### Prior Art Documents:

### Patent Documents:

Patent Document-1: Japan Patent 4906055

### Summary of Invention:

In accordance with the present invention, there is provided a combustion chamber structure for a diesel engine, the diesel engine being equipped with a piston that has on an crown surface thereof a re-entrant type cavity and a fuel injection nozzle with multiple nozzle holes that is arranged on the center line of the cavity, in which:
a lip portion is positioned below an open edge of the re-entrant type cavity and forms at an inlet portion of the cavity the smallest diameter;
a pocket portion is provided above and at an outer peripheral side of the lip portion, the pocket portion being positioned at a height to which a foremost fuel spray injected prior to the top dead center under engine idling is directed; and
an outer circumference of the pocket portion is so positioned that under the engine idling a leading part of the fuel spray is led into the pocket portion while avoiding collision against a wall surface of the outer circumference of the pocket portion.

According to the above-mentioned construction, the fuel injected prior to the top dead center as a pilot injection under engine idling is stayed in the pocket portion without strongly colliding against the wall surface of the pocket portion. In response to a subsequent upward movement of the piston, the fuel in the pocket portion is conveyed into the cavity by a squish flow that is directed from the piston crown surface to the cavity. Then, by a main combustion that starts due to the main injection of the fuel into the cavity at a predetermined injection timing, re-combustion of the fuel takes place. Accordingly, production of unburned HC caused by the pilot injection is suppressed.

Furthermore, due to provision of the lip portion placed below the pocket portion, the gas flow effected by both the swirl flow in the cavity and the squish flow can be maintained at a high level as compared with that effected in a flattened re-entrant type cavity that is produced by simply enlarging the diameter, and thus, deterioration of the soot in the medium high load area is not induced.

In a preferred embodiment, an inlet diameter of the open edge of the cavity is equal to or greater than 58 percent to a bore diameter of the cylinder, and a volume of the pocket portion is equal to or larger than 3 percent and equal to or smaller than 13 percent to an entire volume of the combustion chamber provided at the piston top dead center position.

In a much preferred embodiment, the distance from the piston crown surface to the lip portion in the piston axial direction is equal to or greater than 10 percent and equal to or smaller than 37 percent to the distance from the piston crown surface to a bottom of the cavity.

### Brief Description of Drawings:

Fig. 1 is an illustration for explaining a diesel engine that is equipped with a combustion chamber structure of an embodiment.
Fig. 2 is a sectioned half view of a cylinder and a piston that show the combustion chamber structure of the embodiment.
Fig. 3 is an illustration for explaining the shape of a wall surface of a pocket portion.
Fig. 4 is an illustration for explaining dimensions of various portions of the pocket portion.
Fig. 5 is an illustration for explaining a squish flow produced when a piston is moved upward.
Fig. 6 is a characteristic diagram showing a relation between aperture ratio (de/B) and HC exhaust quantity.
Fig. 7 is a characteristic diagram showing a relation between volume ratio (vs/VC) and soot exhaust quantity.
Fig. 8 is a characteristic diagram showing a relation between height ratio (h2/h1) and soot exhaust quantity.
Fig. 9 is a sectioned half view of a modification that is equipped with two groups of nozzle holes.
Fig. 10 is a sectioned half view of a second modification that is equipped with two groups of nozzle holes.
Fig. 11 is a sectioned half view of a third modification that is equipped with two groups of nozzle holes.

### Embodiments for carrying out Invention:

In the following, an embodiment of the present invention will be described in detail with reference to the accompanying drawings.

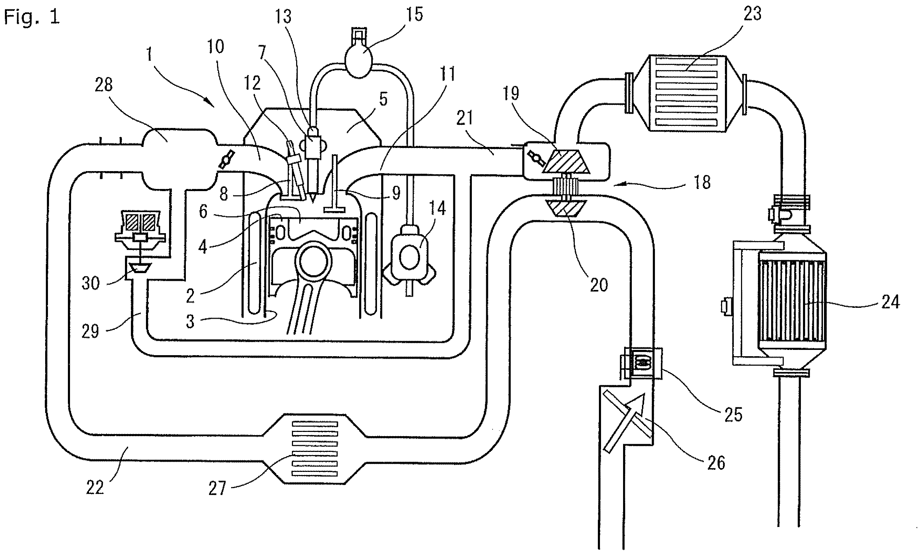

Fig. 1 is an illustration showing a direct injection type diesel engine 1 together with its intake/exhaust systems in connection with the present invention. In the engine, a piston 4 is slidably mated with a cylinder 3 produced in a cylinder block 2, and a cylinder head 5 fixed to an upper face of the cylinder block 2 covers an upper open end of the cylinder 3.

On a top surface of the piston 4, there is formed a re-entrant type cavity 6. The cavity 6 has a shape of a rotary body that is produced when a given curve is rotated about the center axis of the piston 4. That is, when the piston 4 is viewed in a plane, the cavity 6 is a perfect circle and placed at the center of the piston 4. The cylinder head 5 is provided, at a center position of the cylinder 3 that corresponds to the center of the cavity 6, with a fuel injection nozzle 7 with multiple nozzle holes. In the illustrated embodiment, the fuel injection nozzle 7 extends along the center axis of the cylinder 3, that is, the nozzle is arranged vertically.

To the cylinder head 5, there are arranged a pair of intake valves 6 and a pair of exhaust valves 9, and these paired valves 6 and 9 open and close open top portions of intake and exhaust ports 10 and 11, respectively. These intake and exhaust valves 8 and 9 have respective valve stems that extend in parallel with the center axis of the cylinder 3 so that the valve stems are arranged vertically. Furthermore, to the cylinder head 5, there is arranged a glow plug 12 near the fuel injection nozzle 7.

The fuel injection nozzles 7 of the cylinders are connected to a common rail 13 that is schematically shown, and when, upon receiving a drive signal from an engine control unit (not shown), the needle (not shown) of the fuel injection nozzle 7 is lifted, high pressure fuel led to the common rail 13 by a high pressure fuel pump 14 is injected from the fuel injection nozzle. The fuel pressure in the common rail 13 is adjusted to a predetermined value in accordance with an operation condition by the engine control unit through a pressure adjusting valve 15.

The diesel engine 1 of the embodiment is equipped with a turbocharger 18, and a turbine 19 of the turbocharger 18 is installed in a part of an exhaust passage 21 and a compressor 20 is installed in a part of an intake passage 22. In the exhaust passage 21 at a position downstream of the turbine 19, there are arranged a pre-catalytic converter 23 and a main catalytic converter 24 in series. In the intake passage 22 at a position upstream of the compressor 20, there are arranged an air flow meter 25 and an air cleaner 26, and at a position downstream of the compressor 20, that is, between the compressor 20 and a collector portion 28, there is arranged an intercooler 27. In addition to these parts, there is arranged an exhaust gas recirculation device that includes an exhaust gas recirculating passage 29 that connects an upstream portion of the exhaust passage 21 relative to the turbine 19 to the air intake collector portion 28 and an exhaust gas recirculation control valve 30 that controls an exhaust gas recirculation rate to a given rate in accordance with an engine operation condition.

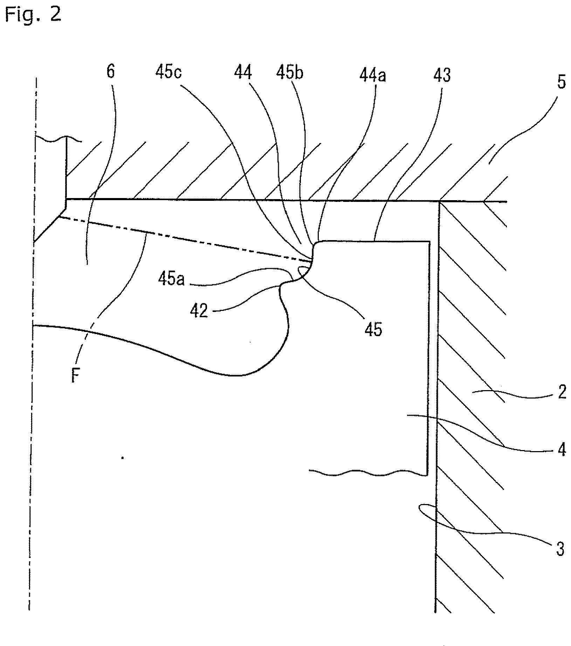

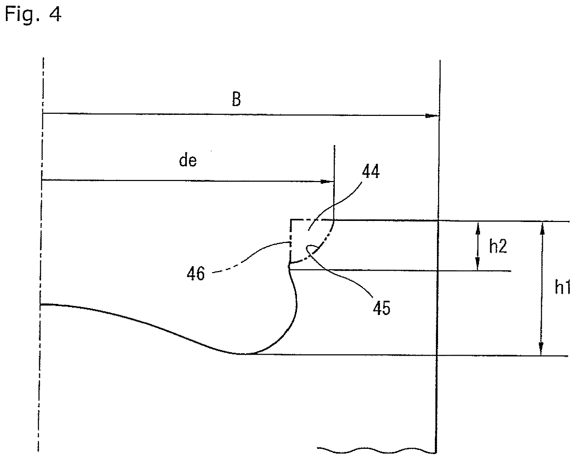

Fig. 2 shows a more concrete sectioned view of the cavity 6. The cavity 6, as a re-entrant type, has at a center part of a bottom surface thereof, a mountain-shaped center projected portion 41 and a diameter of an inlet part of the cavity is small relative to a maximum diameter provided by a middle height position of the cavity. Particularly, a lip portion 42 that provides a smallest diameter at the inlet part is provided at a position lower than a piston crown annular surface 43 in a direction of a piston axis, and at a position higher than the lip portion 42, there is formed a pocket portion 44 that expands or steps back toward an outer cylindrical surface side of the piston 4. That is, the diameter of an open edge 44a of the pocket portion 44 provided by the piston crown surface 43 is larger than a diameter provided by the lip portion 42, and the pocket portion 44 is formed or defined by an outer periphery side wall surface 45 that extends downward from the open edge 44a to the lip portion 42. As is clearly seen from Fig. 4, a space defined between a virtual cylindrical surface 46 provided by extending a leading end of the lip portion 42 in parallel with the center axis of the piston 4 and the above-mentioned wall surface 45 constitutes the pocket portion 44.

The pocket portion 44 is provided at a height position to which the fuel spray, particularly, the first fuel spray injected prior to the top dead center as a pilot injection under idling of the engine is directed. The virtual line F in the drawings shows a center axis of the first fuel spray. As is mentioned hereinabove, the pilot injection fuel spray injected prior to the top dead center has a relatively large penetration. However, to a certain penetration that is determined by a cylinder pressure produced at a crank angle appearing under engine idling operation and a needle lift amount of the fuel injection nozzle 7, the position of the wall surface 45 of the pocket portion 44 is so set that the leading end of the foremost fuel spray is led into the pocket portion 44 while avoiding collision with the surrounding wall surface 45.

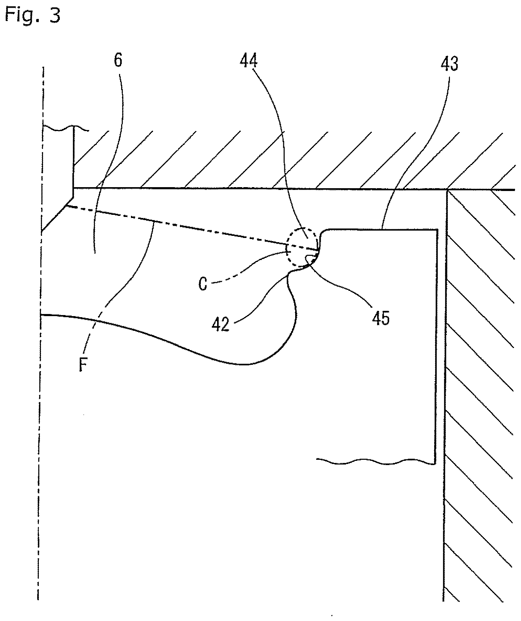

The wall surface 45 is so shaped that an inclined surface 45a extending from an upper surface of the lip portion 42 to the outer periphery side is smoothly and continuously connected to another inclined surface 45b extending from the open edge 44a toward a lower side of the piston 4 through an intermediate transition part 45c. As is seen from Fig. 3, the wall surface 45 has a curved shape that extends along a circular arc or an ellipse C that expands symmetrically with respect to a center axis line F of the fuel spray directed to the pocket 44.

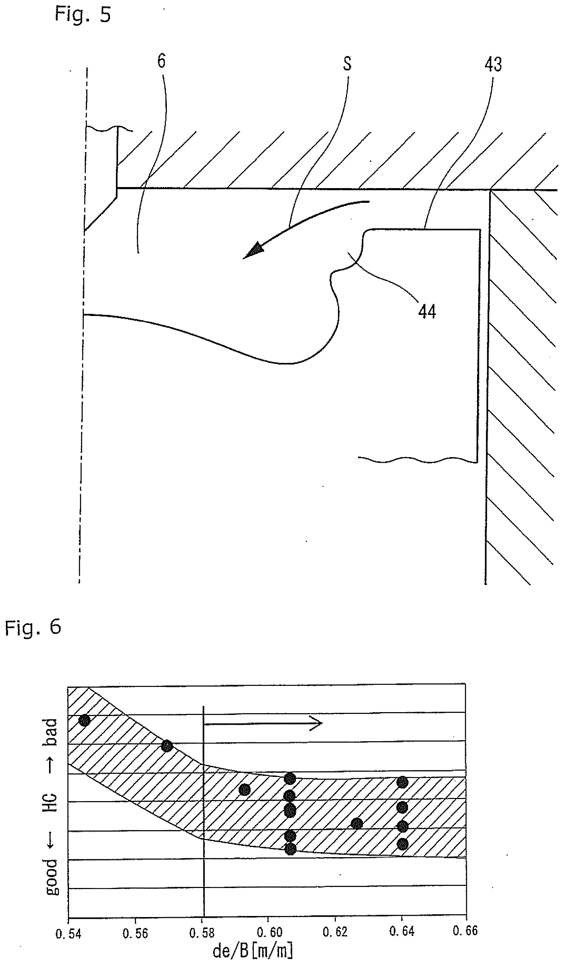

In the diesel engine 1 equipped with the above-mentioned pocket portion 44, basically, the fuel in the fuel spray injected as the pilot injection prior to the top dead center under engine idling operation is temporarily retained in the pocket portion 44 without colliding strongly against the wall surface 45 and spreading outward. When, thereafter, the piston 4 moves upward toward the top dead center, air retained in a space between the piston crown surface 43 and a lower surface of the cylinder head 5 is forced to flow into the cavity 6 forming a squish flow S (see Fig. 5). The pilot injection fuel retained in the pocket portion 44 is moved into the cavity 6 due to the squish flow S. Thereafter, in the cavity 6, combustion of the fuel provided by the main injection effected at a given injection time after the pilot injection starts, and the fuel by the pilot injection is re-combusted by the main combustion.

Like the above, in the above-mentioned embodiment, it never occurs that the fuel provided by the pilot injection, which increases a larger penetration, is exclusively diffused and/or adhered to the wall surface of the cavity 6, and thus, increase of unburned HC caused by the pilot injection at the time of engine idling operation can be suppressed. Furthermore, since the pocket portion 44 is so shaped that only the open edge portion of the cavity 6 is increased in diameter and the volume of the pocket portion 44 is minimized to the extent as required, there is no need of excessively flattening the shape of the cavity 6, especially the shape of the portion lower than the lip portion 42 and thus the gas flow due to the swirl in the cavity 6 and the squish flow can be maintained at a high level. Accordingly, deterioration of soot in the medium high load area is not induced.

Since, in the above mentioned embodiment, the wall surface 45 of the pocket portion 44 is shaped to have a concave curve that extends along a circular arc or an ellipse that has a center at the position of a center axis line F of the fuel spray, the volume of the pocket portion 44 can be reduced while effectively avoiding collision with the leading end of the fuel spray. Even though the collision occurs, the fuel in the fuel spray is suppressed from spreading to the outer peripheral side.

As is seen from Fig. 4, preferably, the ratio (de/B) of the diameter of the open edge 44a of the pocket portion 44, that is, the ratio (de/B) of an inlet diameter de of the pocket portion to a bore diameter B of the cylinder 3 is equal to or larger than 58 percent, and the percent (vs/VC) of the volume vs of the pocket portion 44 in the total volume (VC) of the combustion chamber provided at the piston top dead center position is equal to or larger than 3 percent and equal to or smaller than 13 percent. The total volume (VC) of the combustion chamber is an entire space volume that is provided by adding the volume of the cavity 6 to the volume of the space defined between the piston 4 and the lower surface of the cylinder head 5.

Fig. 6 shows measurement results of various engines that were obtained from tests for finding the relation between the diameter ratio (de/B) of the former and the HC emission quantity. The measurement results showed that when the diameter ratio (de/B) is equal to or larger than 58 percent, the HC emission quantity is sufficiently reduced. This means that if the diameter ratio (de/B) is equal to or larger than 58 percent, the fuel spray of the pilot injection does not strongly collide against the wall surface 45 of the pocket portion 44.

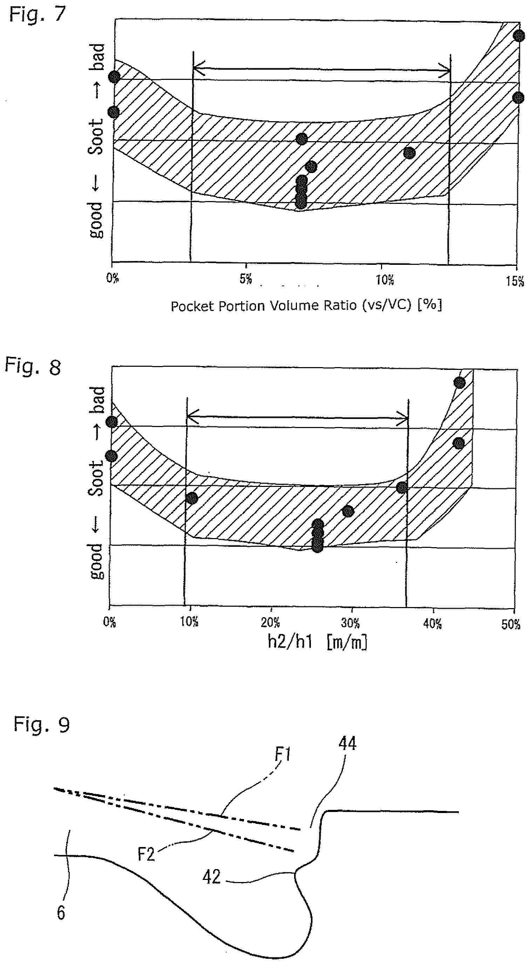

Fig. 7 shows measurement results of the various engines that were obtained from tests for finding the relation between the volume percent (vs/VC) of the latter and the soot exhaust quantity in the medium high load area. As is seen from the drawing, when the volume of the pocket portion 44 is larger than 13 percent, the cavity 6 is necessarily shallow under a limitation of a fixed compression ratio, and as a result, deterioration of the soot is induced. When the volume of the pocket portion is smaller than 3 percent, the cavity takes a shape similar to a shallow cavity that does not substantially have the pocket portion 44, and thus, deterioration of the soot is induced.

Accordingly, preferably, the diameter ratio (de/B) is equal to or larger than 58 percent and the volume percent (vs/VC) is between 3 percent and 13 percent.

Furthermore, as the height position (viz., position in the axial direction of the piston) of the lip portion 42 by which the pocket portion 44 is regulated, it is preferable that as is seen from Fig. 4, the ratio of the distance h2 from the piston crown surface 43 to the lip portion 42 in the piston axial direction to the distance h1 from the piston crown surface 43 to the bottom of the cavity 6 is equal to or greater than 10 percent and equal to or smaller than 37 percent.

Fig. 8 shows measurement results of the various engines that were obtained from tests for finding the relation between the above-mentioned height ratio (h2/h1) and the soot exhaust quantity in the medium high load area. As is seen from the drawing, when the height ratio (h2/h1) is not provided between 10 percent and 37 percent, deterioration of the soot was seen.

Figs. 9 to 11 show modifications (or other embodiments) of the present invention respectively. In the above-mentioned embodiment, the fuel sprays from the nozzle holes of the fuel injection nozzle 7 are all directed to the same height position (viz., position in the cylinder axial direction). However, in the embodiments of Figs. 9 to 11, the fuel injection nozzle 7 is equipped with both a first group of nozzle holes whose spray center axial line F1 is directed to a relatively upper side position and a second group of nozzle holes whose spray center axial line F2 is directed to a relatively lower side position. In other words, the first and second groups of nozzle holes have different inclination angles (so-called bevel angles) relative to the cylinder center axial line.

In the embodiment of Fig. 9, the first group of nozzle holes and the second group of nozzle holes are the same in diameter. In this case, since the first and second groups of nozzle holes have an identical penetration, both of the first and second groups of nozzle holes are directed to the pocket portion 44.

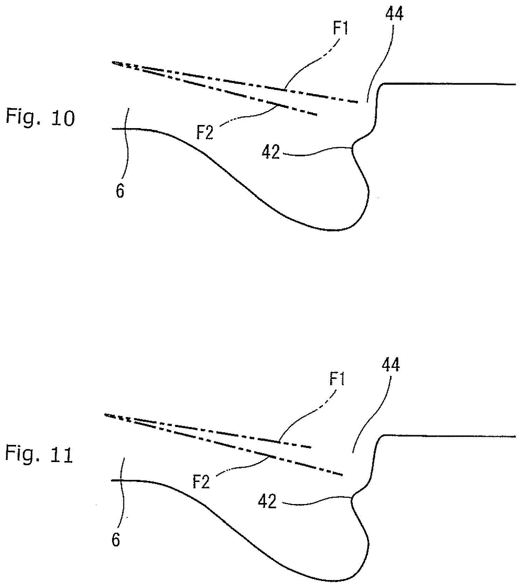

In the embodiment of Fig. 10, the diameter of the second group of nozzle holes is larger than that of the first group of nozzle holes, and thus, in case where the injection amount is small, the penetration of the first group of nozzle holes is large as compared with that of the second group of nozzle holes. Accordingly, the first group of nozzle holes are directed to the pocket portion 44 and the second group of nozzle holes are directed to the vicinity of the lip portion 42.

In the embodiment of Fig. 11, the diameter of the second group of nozzle holes is small as compared with that of the first group of nozzle holes, and thus, in case where the injection amount is small, the penetration of the second group of nozzle holes is larger as compared with that of the first group of nozzle holes. Accordingly, like in the case of Fig. 9, both of the first and second groups of nozzle holes are directed to the pocket portion 44.

## Claims

1. A combustion chamber structure for a diesel engine, the diesel engine being equipped with a piston that has on a crown surface thereof a re-entrant type cavity and a fuel injection nozzle with multiple nozzle holes that is arranged on the center line of the cavity, in which:
a lip portion is positioned below an open edge of the re-entrant type cavity and forms at an inlet portion of the cavity the smallest diameter;
a pocket portion is provided above and at an outer peripheral side of the lip portion, the pocket portion being positioned at a height to which a foremost fuel spray injected prior to the top dead center under engine idling is directed; and
an outer circumference of the pocket portion is so positioned that under the engine idling a leading part of the fuel spray is led into the pocket portion while avoiding collision against a wall surface of the outer circumference of the pocket portion.

2. A combustion chamber structure for a diesel engine as claimed in Claim 1, in which the fuel held in the pocket portion is forced to flow into the cavity due to a squish flow produced and directed toward the cavity in response to upward movement of the piston.

3. A combustion chamber structure for a diesel engine as claimed in Claim 1 or 2, in which the outer circumference wall surface of the pocket portion has a circular arc-shaped cross section.

4. A combustion chamber structure for a diesel engine, the diesel engine being equipped with a piston that has on an crown surface thereof a re-entrant type cavity and a fuel injection nozzle with multiple nozzle holes that is arranged on the center line of the cavity, in which:
a lip portion is positioned below an open edge of the re-entrant type cavity and forms at an inlet portion of the cavity the smallest diameter;
a pocket portion is provided above and at an outer peripheral side of the lip portion, the pocket portion being positioned at a height to which a foremost fuel spray injected prior to tope dead center under engine idling is directed;
an inlet diameter of the open edge of the cavity is equal to or greater than 58 percent to a bore diameter of a cylinder; and
a volume of the pocket portion is equal to or larger than 3 percent and equal to or smaller than 13 percent to an entire volume of the combustion chamber provided at the piston top dead center position.

5. A combustion chamber structure for a diesel engine as claimed in Claim 3, in which the distance from a piston crown surface to the lip portion in the piston axial direction is equal to or greater than 10 percent and equal to or smaller than 37 percent to the distance from the piston crown surface to a bottom of the cavity.
